# FASCICULE DE BREVET EUROPEEN

(11) **EP 2 502 016 B1**
(45) Date de publication et mention de la délivrance du brevet: **28.02.2018**
(21) Numéro de dépôt: 10773360.2
(22) Date de dépôt: 09.11.2010
(51) Int. Cl.: F28F 21/06, F28F 21/08, F28F 9/22, F28D 7/16, F02M 26/32, F28D 21/00

(54) **ECHANGEUR DE CHALEUR POUR GAZ, NOTAMMENT POUR LES GAZ D'ECHAPPEMENT D'UN MOTEUR**
WÄRMETAUSCHER FÜR GASE, IM BESONDEREN FÜR MOTORABGASE
HEAT EXCHANGER FOR GASES, IN PARTICULAR FOR THE EXHAUST GASES OF AN ENGINE

(30) Priorité: 18.11.2009 ES 200931016
(43) Date de publication de la demande: 26.09.2012
(73) Titulaire: Valeo Termico S.A., 50011 Zaragoza (ES)
(72) Inventeur: TOMAS HERRERO, Eva, E-50011 Zaragoza (ES); DE FRANCISCO MORENO, Juan Carlos, E-50011 Zaragoza (ES)
(74) Mandataire: Neuviale, Bertrand
(86) Numéro de dépôt international: PCT/EP2010/067082
(87) Numéro de publication internationale: WO 2011/061090

(56) Documents cités:
- DE-A1- 2 410 292
- DE-A1-102006 051 000
- JP-A- 2001 027 158
- US-A1- 2004 194 917
- US-A1- 2008 073 059

## Description

La présente invention concerne un échangeur de chaleur pour gaz, notamment pour les gaz d'échappement d'un moteur. Un échangeur de chaleur comprenant les caractéristiques du préambule de la revendication 1 est divulgué dans document JP 2001 027158. L'invention trouve une application particulière dans les échangeurs de recirculation de gaz d'échappement (EGRC) d'un moteur, notamment d'un moteur essence et diesel.

### ARRIÈRE-PLAN DE L'INVENTION

Les échangeurs EGR ont pour fonction principale l'échange de chaleur entre les gaz d'échappement et le fluide de refroidissement dans le but de refroidir les gaz.

Les échangeurs de chaleur EGR sont actuellement largement utilisés dans les applications diesel dans le but de réduire les émissions, ainsi que dans les applications essence dans le but de réduire la consommation de combustible.

Le marché tend à une réduction de la dimension des moteurs et à la mise en oeuvre des échangeurs de chaleur EGR non seulement dans les applications à haute pression (HP) mais aussi dans celles à basse pression (LP) ; ces deux tendances influent sur la conception des échangeurs de chaleur EGR. Les constructeurs de véhicules exigent des échangeurs de chaleur EGR offrant de meilleurs rendements, tandis que l'espace disponible pour le montage de l'échangeur et de ses composants devient de plus en plus petit et difficile à intégrer.

Par ailleurs, dans bon nombre d'applications, le flux de fluide de refroidissement disponible pour refroidir les gaz d'échappement a tendance à diminuer alors que les rendements de l'échangeur ont continué d'augmenter.

La configuration actuelle des échangeurs EGR sur le marché correspond à celle d'un échangeur de chaleur métallique généralement fabriqué en acier inoxydable ou en aluminium.

Il existe essentiellement deux types d'échangeurs de chaleur EGR : un premier type consiste en une carcasse à l'intérieur de laquelle est placé un faisceau de tubes parallèles pour le passage des gaz, le fluide de refroidissement circulant par la carcasse à l'extérieur des tubes ; le second type compte une série de plaques parallèles constituant les surfaces d'échange de chaleur, les gaz d'échappement et le fluide de refroidissement circulant entre deux plaques, en couches alternées, et des ailettes pouvant être ménagées pour améliorer l'échange de chaleur.

Dans le cas d'échangeurs de chaleur à faisceau de tubes, la jonction entre les tubes et la carcasse peut être de différents types. D'une façon générale, les tubes sont fixés par leurs extrémités entre deux plaques de support accouplées à chaque extrémité de la carcasse, les deux plaques de support présentant une pluralité d'orifices permettant le montage des tubes respectifs.

Lesdites plaques de support sont elles-mêmes fixées à des moyens de raccord à la ligne de recirculation, ces moyens de raccord pouvant consister en un raccord en V ou un rebord périphérique de raccord ou bride, en fonction de la conception de la ligne de recirculation à laquelle l'échangeur est raccordé. Le rebord périphérique peut être assemblé conjointement avec un réservoir de gaz de façon à ce que le réservoir de gaz forme une pièce intermédiaire entre la carcasse et le rebord, ou le rebord peut être monté directement sur la carcasse.

La majorité des composants des deux types d'échangeurs EGR sont métalliques, si bien que les échangeurs sont assemblés par des moyens mécaniques puis soudés au four ou à l'arc ou au laser pour assurer un niveau d'étanchéité adéquat pour l'application envisagée.

Dans certains cas, l'échangeur de chaleur EGR peut également comporter des composants fabriqués en plastique, lesquels peuvent remplir une ou plusieurs fonctions sous forme d'une pièce unique, comme par exemple la carcasse en plastique intégrant les tubes du circuit du fluide de refroidissement et les supports d'assujetissement à l'environnement moteur.

Les échangeurs EGR à faisceau de tubes peuvent utiliser des déflecteurs, situés dans le circuit du fluide de refroidissement.

La conception des déflecteurs et leur nombre varient d'une application à l'autre en fonction du motif de leur utilisation et des restrictions du constructeur de véhicules de chaque application (en termes de conditions de fonctionnement ou de limitations liées au conditionnement).

La majorité des échangeurs EGR disponibles sur le marché ne comportent aucun déflecteur. Il existe toutefois des applications qui en exigent. Dans la plupart des cas, les déflecteurs sont utilisés pour améliorer la circulation du fluide de refroidissement autour des tubes de gaz et éviter ainsi la formation de points de stagnation pouvant entraîner l'ébullition du fluide de refroidissement dans l'échangeur, et pour refroidir uniformément l'ensemble des tubes et parvenir ainsi à un meilleur rendement de l'échangeur de chaleur.

Dans d'autres cas, l'incorporation de déflecteurs a pour but d'éviter les problèmes mécaniques susceptibles de survenir dans les conditions de fonctionnement de l'échangeur de chaleur dans le moteur.

Diverses raisons justifient l'utilisation de déflecteurs dans l'échangeur, notamment :
- La position des conduits d'entrée et de sortie du fluide de refroidissement dans la carcasse. Dans certains environnements moteur, il est nécessaire de placer les deux conduits du même côté de la carcasse, ce qui peut créer une trajectoire privilégiée pour le fluide de refroidissement.
- Un flux de fluide de refroidissement très faible et/ou une température d'entrée des gaz très élevée.
- Un diamètre de la carcasse très important pouvant donner lieu à des vitesses très faibles du fluide de refroidissement autour des tubes de gaz.

Certaines de ces raisons peuvent en pratique s'avérer fréquentes, d'une partie du fait de la tendance à la réduction du conditionnement de l'échangeur et de l'espace disponible pour celui-ci. D'autre part, l'échangeur est, dans certains cas, inséré dans d'autres composants tels que le DPF (Diesel Particulate Filter), c'est-à-dire le dispositif d'élimination des particules des gaz d'échappement d'un moteur diesel. La carcasse de l'échangeur doit donc être adaptée au diamètre du DPF, ce diamètre étant normalement supérieur à celui des échangeurs circulaires classiques. Par ailleurs, les conduits d'entrée et de sortie du fluide de refroidissement doivent tous deux être placés du même côté de la carcasse, autrement dit du côté opposé à celui introduit dans le DPF.

Un type d'échangeur connu comporte l'entrée des gaz disposée partiellement à l'intérieur du DPF et les conduits d'entrée et de sortie du fluide de refroidissement tous deux disposés à la même extrémité de la carcasse, opposée à l'entrée des gaz. Il est nécessaire, dans ce cas, d'amener rapidement le flux de fluide de refroidissement à la zone d'entrée des gaz et à grandes vitesses du fait de la température élevée des gaz.

Une solution connue consiste à utiliser divers déflecteurs transversaux disposés à l'intérieur de la carcasse de section circulaire pour assurer une répartition correcte du fluide de refroidissement et renforcer simultanément la résistance mécanique de la partie soumise aux vibrations. Ces déflecteurs sont fixés à la carcasse par soudure au four, et ne sont pas alignés longitudinalement mais disposés en alternance.

Les brevets JP2000292089 et JP2000283666 décrivent diverses conceptions de plaques déflectrices transversales disposées à l'intérieur de carcasses de section circulaire, les entrées et sorties du fluide de refroidissement étant séparées, chacune à une extrémité de la carcasse. Les conceptions des plaques déflectrices sont très similaires à celles des plaques de support situées aux deux extrémités de la carcasse pour assujettir les extrémités du faisceau de tubes, et présentent le même diamètre correspondant au diamètre intérieur de la carcasse. Ces plaques déflectrices comportent certains orifices pour le passage des tubes ainsi que des orifices plus gros dans le reste de leur surface pour le passage du fluide de refroidissement. Ces orifices plus gros des plaques déflectrices sont répartis en alternance dans la direction longitudinale.

Le brevet KR20080013457 décrit un déflecteur hélicoïdal inséré dans une carcasse de section circulaire.

### DESCRIPTION DE L'INVENTION

La présente invention a pour objet un échangeur de chaleur pour gaz, notamment pour les gaz d'échappement d'un moteur, permettant de remédier aux inconvénients des échangeurs connus dans la technique, l'échangeur de chaleur étant susceptible d'améliorer la répartition du fluide de refroidissement pour parvenir à un rendement optimal.

L'échangeur de chaleur pour gaz, notamment pour les gaz d'échappement d'un moteur, objet de la présente invention comprend un noyau disposé à l'intérieur d'une carcasse, ledit noyau comportant un faisceau de tubes destiné à la circulation des gaz avec échange de chaleur avec un fluide de refroidissement, lesdits tubes étant fixés par leurs extrémités entre deux plaques de support accouplées à chaque extrémité de la carcasse, et est caractérisé en ce que ladite carcasse comporte deux conduits d'entrée et de sortie du fluide de refroidissement disposés à proximité l'un de l'autre et d'un même côté de la carcasse, et en ce qu'il comprend des moyens de déviation disposés à l'intérieur de la carcasse susceptibles de diriger le flux de fluide de refroidissement à contre-courant par rapport à la circulation du flux de gaz dans une partie au moins de ladite carcasse.

De cette manière, les moyens de déviation permettent d'amener le fluide de refroidissement aux zones de haute température des gaz ou là où les vitesses du fluide de refroidissement sont très faibles.

Il est donc possible d'obtenir les rendements exigés par les constructeurs de véhicules tout en évitant les problèmes liés aux faibles vitesses du fluide de refroidissement dans l'échangeur de chaleur. L'utilisation des moyens de déviation peut également renforcer la résistance mécanique de l'échangeur de chaleur.

Avantageusement, les moyens de déviation sont des moyens déflecteurs.

De préférence, les moyens déflecteurs comportent un déflecteur longitudinal disposé à une distance adéquate de la paroi intérieure de la carcasse pour permettre le passage du flux de fluide de refroidissement vers l'extrémité d'entrée des gaz, et une pluralité de déflecteurs transversaux disposés en alternance le long du déflecteur longitudinal et pourvus de découpes de passage permettant de diriger de façon homogène le flux de fluide de refroidissement de l'extrémité d'entrée des gaz vers l'extrémité de sortie des gaz selon une trajectoire sensiblement hélicoïdale.

Pour assembler le déflecteur longitudinal et le placer longitudinalement aux tubes de gaz, il convient de modifier localement la répartition des tubes de gaz dans la plaque de support de façon à augmenter la distance entre lesdits tubes par rapport à la distance entre les autres files de tubes en lui donnant une valeur légèrement supérieure à deux fois l'épaisseur du déflecteur longitudinal pour garantir au déflecteur longitudinal un espace de positionnement et de contact suffisant.

Avantageusement, le déflecteur longitudinal est joint à la plaque de support opposée à l'entrée des gaz de manière directe ou en ménageant un petit espace en fonction des joints et des matériaux.

De préférence, la distance entre le déflecteur longitudinal et la paroi intérieure de la carcasse dans laquelle est situé un des conduits du fluide de refroidissement est d'environ une ou deux files de tubes de gaz.

De cette manière, le fluide de refroidissement est rapidement amené à l'entrée des gaz.

De préférence, la longueur du déflecteur longitudinal dépend du diamètre de la carcasse et de la technologie des tubes de gaz utilisée.

Avantageusement, certains déflecteurs transversaux sont joints directement au déflecteur longitudinal, et d'autres déflecteurs transversaux sont joints à la paroi intérieure de la carcasse.

De préférence, le nombre et la position des déflecteurs transversaux dépendent du diamètre et de la longueur de la carcasse.

Avantageusement, un premier déflecteur transversal plus proche de la plaque de support d'entrée des gaz est disposé à une extrémité du déflecteur longitudinal.

De préférence, la longueur dudit premier déflecteur transversal est suffisamment grande pour garantir une zone de passage du fluide de refroidissement similaire à la distance séparant le déflecteur longitudinal de la paroi intérieure de la carcasse.

De préférence aussi, le reste des déflecteurs transversaux, disposés à la suite dudit premier déflecteur transversal, sont répartis de manière à ménager entre eux une distance croissante à mesure qu'ils s'éloignent de l'entrée des gaz et donc de la zone plus chaude.

Avantageusement, les déflecteurs transversaux sont de dimension inférieure à celle des plaques de support, et comportent des découpes à leur surface périphérique permettant le passage du fluide de refroidissement.

De préférence, des découpes de petite dimension sont ménagées dans des zones opposées à des découpes principales plus grandes pour obtenir un flux de fluide de refroidissement les traversant et produire des courants et pour éviter les zones de faible vitesse de l'autre côté du déflecteur transversal.

Le flux hélicoïdal est obtenu du fait de la position différente des découpes principales. Pour concevoir et répartir correctement lesdites découpes principales, il convient de tenir compte de la position du conduit de sortie du fluide de refroidissement. La conception des déflecteurs longitudinaux et de leurs découpes de passage doit être réalisée en prenant comme point de départ le déflecteur longitudinal le plus proche du conduit de sortie du fluide de refroidissement.

Avantageusement, le déflecteur longitudinal comporte des découpes de petite dimension pour obtenir un débit minimal de fluide de refroidissement à travers lui et éviter les zones de faible vitesse. La position de ces découpes dépendra de la position relative des déflecteurs transversaux.

La jonction des moyens déflecteurs dépend du type de matériaux utilisés.

Selon un mode de réalisation de l'invention, les moyens déflecteurs sont métalliques.

Avantageusement, les moyens déflecteurs métalliques sont joints à la carcasse au moyen d'une pâte à souder ou d'un procédé de soudure à l'arc ou au laser, le déflecteur longitudinal étant joint à la plaque de support pour empêcher tout déplacement longitudinal.

Selon un autre mode de réalisation de l'invention, les moyens déflecteurs sont en matière plastique.

Avantageusement, dans ce mode de réalisation, la carcasse comporte des nervures, longitudinales ou transversales, qui guident les déflecteurs en plastique au cours de leur procédé d'assemblage et qui empêchent leur déplacement dans les conditions de fonctionnement.

Selon un autre mode de réalisation de l'invention, les déflecteurs transversaux sont en matière plastique et les déflecteurs longitudinaux sont métalliques.

Avantageusement, dans ce mode de réalisation, les déflecteurs transversaux en plastique sont fixés au déflecteur longitudinal métallique au moyen d'ailes de petite dimension réalisées dans celui-ci.

Avantageusement aussi, les moyens déflecteurs sont insérés dans une carcasse métallique ou en plastique. Le matériau de la carcasse peut jouer un rôle dans la conception des déflecteurs et du type de jonction.

Selon un mode de réalisation, les conduits d'entrée et de sortie du fluide de refroidissement sont séparés d'une distance suffisamment grande pour permettre la mise en place d'un déflecteur longitudinal plan.

Selon un autre mode de réalisation dans lequel les conduits d'entrée et de sortie du fluide de refroidissement sont très rapprochés, le déflecteur longitudinal comporte une partie en gradin pour contourner l'un desdits conduits.

### BRÈVE DESCRIPTION DES DESSINS

Dans le but de faciliter la description de ce qui a été exposé précédemment, on joint des dessins dans lesquels sont représentés, sous forme schématique et uniquement à titre d'exemple non limitatif, des cas pratiques de réalisation de l'échangeur de chaleur pour gaz de l'invention. Dans ces dessins :
la figure 1 est une vue en perspective de l'échangeur de chaleur illustrant les moyens déflecteurs et la trajectoire du fluide de refroidissement dans la carcasse, selon un mode de réalisation préféré de l'invention ;
la figure 2 est une vue en perspective des moyens déflecteurs de la figure 1 illustrant plus clairement leur position dans la carcasse ;
la figure 3 est une vue en perspective des déflecteurs transversaux illustrant plus en détail leurs découpes de petite dimension ;
la figure 4 est une vue en perspective schématique des moyens déflecteurs selon un autre mode de réalisation; et
la figure 5 est une vue en perspective schématique des moyens déflecteurs selon un autre mode de réalisation.

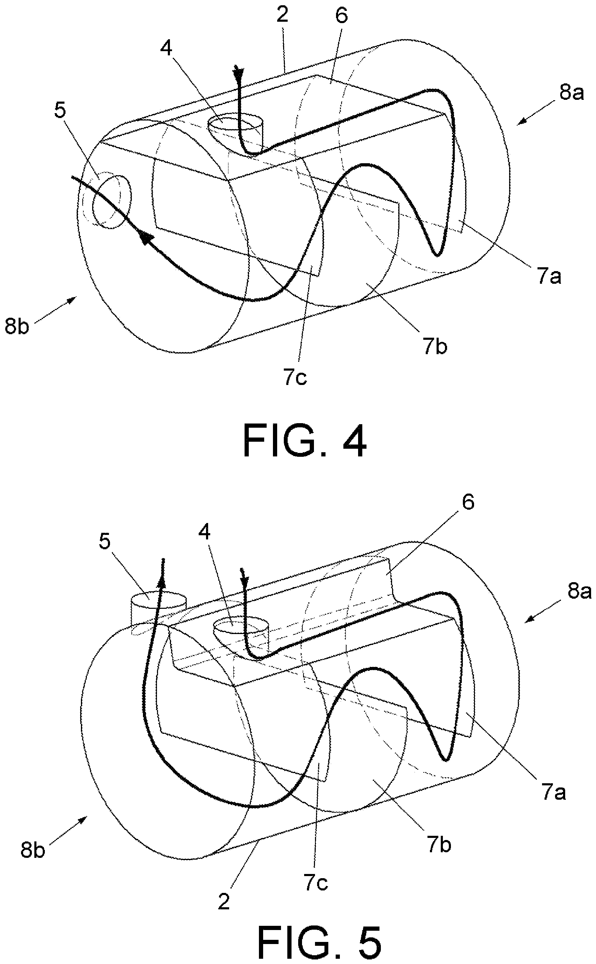

Le mode de réalisation représenté dans les figures 4 et 5 n'est pas couvert par les revendications.

### DESCRIPTION DE MODES DE RÉALISATION PRÉFÉRÉS

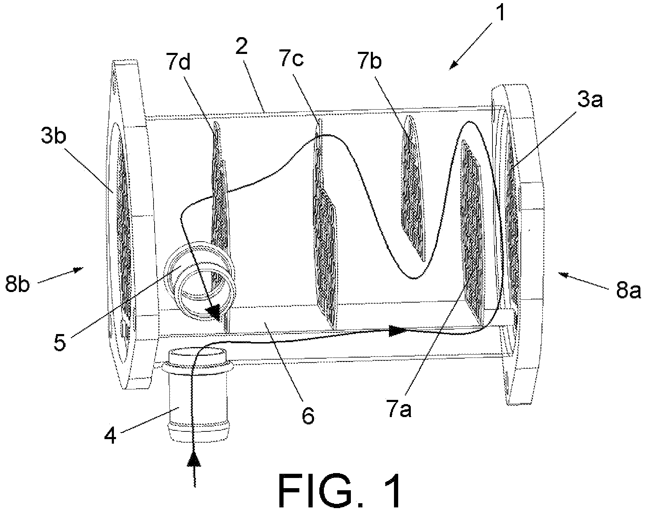

En référence aux figures 1 à 3, l'échangeur de chaleur 1 pour gaz, notamment pour les gaz d'échappement d'un moteur, comprend un noyau disposé à l'intérieur d'une carcasse 2, ledit noyau comportant un faisceau de tubes (non illustré par souci de clarté) destiné à la circulation des gaz avec échange de chaleur avec un fluide de refroidissement, lesdits tubes étant fixés par leurs extrémités entre deux plaques de support 3a,3b accouplées à chaque extrémité de la carcasse 2.

Ladite carcasse 2 comporte deux conduits d'entrée 4 et de sortie 5 du fluide de refroidissement disposés à proximité l'un de l'autre et d'un même côté de la carcasse. Ledit échangeur 1 comprend également des moyens déflecteurs 6,7a-7d disposés à l'intérieur de la carcasse 2 susceptibles de diriger le flux de fluide de refroidissement à contre-courant par rapport à la circulation du flux de gaz dans une partie au moins de ladite carcasse 2.

Les moyens déflecteurs 6,7a-7d permettent d'amener le fluide de refroidissement aux zones de haute température des gaz ou là où les vitesses du fluide de refroidissement sont très faibles. Le parcours du fluide de refroidissement a été illustré par une ligne fléchée.

Il est donc possible d'obtenir les rendements exigés par les constructeurs de véhicules tout en évitant les problèmes liés aux faibles vitesses du fluide de refroidissement dans l'échangeur de chaleur 1. L'utilisation des moyens déflecteurs 6,7a-7d peut également renforcer la résistance mécanique de l'échangeur de chaleur 1.

Dans ce mode de réalisation préféré, les moyens déflecteurs comportent un déflecteur longitudinal 6 disposé à une distance adéquate de la paroi intérieure de la carcasse 2 dans laquelle est situé le conduit d'entrée 4 du fluide de refroidissement pour permettre le passage du flux du fluide de refroidissement vers l'extrémité d'entrée des gaz 8a, et une pluralité de déflecteurs transversaux 7a-7d disposés en alternance le long du déflecteur longitudinal 6.

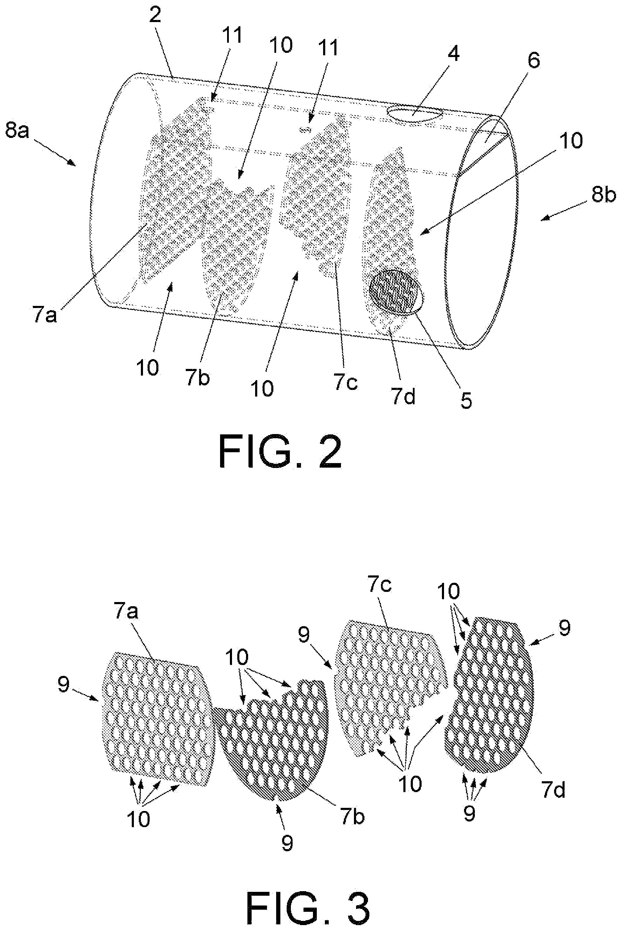

Lesdits déflecteurs transversaux 7a-7d sont pourvus de découpes de passage 9,10 (cf. figures 2 et 3) permettant de diriger de façon homogène le flux de fluide de refroidissement de l'extrmité d'entrée des gaz 8a vers l'extrémité de sortie des gaz 8b selon une trajectoire sensiblement hélicoïdale, illustrée par la ligne fléchée de la figure 1.

Le déflecteur longitudinal 6 est pourvu d'ouvertures de petite dimension 11 (cf. figure 2) situées à proximité des zones de contact des déflecteurs transversaux 7a-7d avec le déflecteur longitudinal 6 pour accroître la vitesse du fluide de refroidissement dans ces zones.

Pour assembler le déflecteur longitudinal 6 et le placer longitudinalement aux tubes de gaz, il convient de modifier localement la répartition des tubes de gaz dans la plaque de support 3a,3b de façon à augmenter la distance entre lesdits tubes par rapport à la distance entre les autres files de tubes en lui donnant une valeur légèrement supérieure à deux fois l'épaisseur du déflecteur longitudinal 6 pour garantir au déflecteur longitudinal 6 un espace de positionnement et de contact suffisant.

Le déflecteur longitudinal 6 est joint à la plaque de support 3b opposée à l'entrée des gaz 8a de manière directe ou en ménageant un petit espace en fonction des joints et des matériaux.

La distance entre le déflecteur longitudinal 6 et la paroi intérieure de la carcasse 2 dans laquelle est situé le conduit d'entrée 4 du fluide de refroidissement est d'environ une ou deux files de tubes de gaz. De cette manière, le fluide de refroidissement est rapidement amené à l'entrée des gaz 8a.

La longueur du déflecteur longitudinal 6 dépend du diamètre de la carcasse 2 et de la technologie des tubes de gaz utilisée.

Certains déflecteurs transversaux 7a,7c,7d sont joints directement au déflecteur longitudinal 6, tandis que d'autres déflecteurs transversaux 7b sont joints à la paroi intérieure de la carcasse 2.

Le nombre et la position des déflecteurs transversaux 7a-7d dépendent du diamètre et de la longueur de la carcasse 2.

Un premier déflecteur transversal 7a plus proche de la plaque de support 3a d'entrée des gaz 8a est disposé quasiment à une extrémité du déflecteur longitudinal 6. La longueur dudit premier déflecteur transversal 7a est suffisamment grande pour garantir une zone de passage du fluide de refroidissement similaire à la distance séparant le déflecteur longitudinal 6 de la paroi intérieure de la carcasse 2.

Le reste des déflecteurs transversaux 7b-7d, disposés à la suite dudit premier déflecteur transversal 7a, sont répartis de manière à ménager entre eux une distance croissante à mesure qu'ils s'éloignent de l'entrée des gaz 8a et donc de la zone plus chaude.

Les déflecteurs transversaux 7a-7d sont de dimension inférieure à celle des plaques de support 3a,3b, et comportent des découpes 9,10 à leur surface périphérique permettant le passage du fluide de refroidissement.

Certaines des découpes de petite dimension 9, plus petites que l'aire d'un tube de gaz, sont ménagées dans des zones opposées à des découpes principales 10 plus grandes pour obtenir un flux de fluide de refroidissement les traversant et produire des courants et pour éviter les zones de faible vitesse de l'autre côté du déflecteur transversal 7a-7d.

Le flux hélicoïdal est obtenu du fait de la position différente des découpes principales 10. Pour concevoir et répartir correctement lesdites découpes principales 10, il convient de tenir compte de la position du conduit de sortie 5 du fluide de refroidissement. La conception des déflecteurs longitudinaux 6 et de leurs découpes de passage 9,10 doit être réalisée en prenant comme point de départ le déflecteur longitudinal 7a le plus proche du conduit de sortie 5 du fluide de refroidissement.

La jonction des moyens déflecteurs 6,7a-7d dépend du type de matériaux utilisés.

Selon un mode de réalisation de l'invention, les moyens déflecteurs 6,7a-7d sont métalliques. Les moyens déflecteurs 6,7a-7d métalliques sont joints à la carcasse 2 au moyen d'une pâte à souder ou d'un procédé de soudure à l'arc ou au laser, le déflecteur longitudinal 6 étant joint à la plaque de support 3b pour empêcher tout déplacement longitudinal, si bien qu'il n'est pas nécessaire de prolonger cette soudure sur toute la périphérie du déflecteur.

Selon un autre mode de réalisation de l'invention, les moyens déflecteurs 6,7a-7d sont en matière plastique. Dans ce cas, la carcasse 2 comporte des nervures, longitudinales ou transversales, qui guident les déflecteurs 6,7a-7d en plastique au cours de leur procédé d'assemblage et qui empêchent leur déplacement dans les conditions de fonctionnement.

Selon un autre mode de réalisation de l'invention, les déflecteurs transversaux 6,7a-7d sont en matière plastique et les déflecteurs longitudinaux 6 sont métalliques. Dans ce cas, les déflecteurs transversaux 7a-7d en plastique sont fixés au déflecteur longitudinal 6 métallique au moyen d'ailes de petite dimension réalisées dans celui-ci.

Avantageusement aussi, les moyens déflecteurs 6,7a-7d sont insérés dans une carcasse 2 métallique ou en plastique. Le matériau de la carcasse 2 peut jouer un rôle dans la conception des déflecteurs et du type de jonction.

Les figures 1 à 4 illustrent un mode de réalisation dans lequel les conduits d'entrée 4 et de sortie 5 du fluide de refroidissement sont séparés d'une distance suffisamment grande pour permettre la mise en place d'un déflecteur longitudinal 6 plan.

La figure 5 illustre un autre mode de réalisation dans lequel les conduits d'entrée 4 et de sortie 5 du fluide de refroidissement sont très rapprochés. Dans ce cas, le déflecteur longitudinal 6 nécessite une partie en gradin pour contourner l'un desdits conduits 4,5 du fluide de refroidissement.

## Revendications

1. Échangeur de chaleur (1) pour gaz, notamment pour les gaz d'échappement d'un moteur, comprenant un noyau disposé à l'intérieur d'une carcasse (2), ledit noyau comportant un faisceau de tubes destiné à la circulation des gaz avec échange de chaleur avec un fluide de refroidissement, lesdits tubes étant fixés par leurs extrémités entre deux plaques de support (3a,3b) accouplées à chaque extrémité de la carcasse (2), ledit noyau comportant en outre deux conduits d'entrée (4) et de sortie (5) du fluide de refroidissement disposés à proximité l'un de l'autre et d'un même côté de la carcasse, l'échangeur de chaleur comprenant des moyens de déviation (6,7a-7d) disposés à l'intérieur de la carcasse (2) susceptibles de diriger le flux de fluide de refroidissement à contre-courant par rapport à la circulation du flux de gaz dans une partie au moins de ladite carcasse (2), les moyens de déviation étant des moyens déflecteurs (6,7a-7d) et en ce que les moyens déflecteurs comporte un déflecteur longitudinal (6) disposé à une distance adéquate de la paroi intérieure de la carcasse (2) pour permettre le passage du flux de fluide de refroidissement vers l'extrémité d'entrée des gaz (8a), **caractérisé en ce que** les moyens déflecteurs comporte une pluralité de déflecteurs transversaux (7a-7d) disposés en alternance le long du déflecteur longitudinal (6) et pourvus de découpes de passage (9, 10) permettant de diriger de façon homogène le flux de fluide de refroidissement de l'extrémité d'entrée des gaz (8a) vers l'extrémité de sortie des gaz (8b) selon une trajectoire sensiblement hélicoïdale, dans lequel la distance entre le déflecteur longitudinal (6) et la paroi intérieure de la carcasse (2) dans laquelle est situé un des conduits (4) du fluide de refroidissement est d'environ une ou deux files de tubes de gaz, permettant à un fluide de refroidissement d'être rapidement amené à l'entrée des gaz.

2. Échangeur (1) selon la revendication 1, dans lequel le déflecteur longitudinal, (6) est joint à la plaque de support (3b) opposée à l'entrée des gaz (8a) de manière directe ou en ménageant un petit espace en fonction des joints et des matériaux.

3. Échangeur (1) selon l'une des revendications 1 à 2, dans lequel la longueur du déflecteur longitudinal (6) dépend du diamètre de la carcasse (2) et de la technologie des tubes de gaz utilisée.

4. Échangeur (1) selon l'une des revendications 1 à 3, dans lequel certains déflecteurs transversaux (7a,7c,7d) sont joints directement au déflecteur longitudinal (6), et d'autres déflecteurs transversaux (7b) sont joints à la paroi intérieure de la carcasse (2).

5. Échangeur (1) selon l'une des revendications 1 à 4, dans lequel le nombre et la position des déflecteurs transversaux (7a-7d) dépend du diamètre et de la longueur de la carcasse (2).

6. Échangeur (1) selon l'une des revendications 1 à 5, dans lequel un premier déflecteur transversal (7a) plus proche de la plaque de support (3a) d'entrée des gaz (8a) est disposé à une extrémité du déflecteur longitudinal.

7. Échangeur (1) selon la revendication 6, dans lequel la longueur dudit premier déflecteur transversal (7a) est suffisamment grande pour garantir une zone de passage du fluide de refroidissement similaire à la distance séparant le déflecteur longitudinal (6) de la paroi intérieure de la carcasse (2).

8. Échangeur (1) selon la revendication 6 ou 7, dans lequel le reste des déflecteurs transversaux (7b-7d), disposés à la suite dudit premier déflecteur transversal (7a), sont répartis de manière à ménager entre eux une distance croissante à mesure qu'ils s'éloignent de l'entrée des gaz (8a) et donc de la zone plus chaude.

9. Échangeur (1) selon l'une des revendications 1 à 8, dans lequel les déflecteurs transversaux (7a-7d) sont de dimension inférieure à celle des plaques de support (3a,3b), et comportent des découpes (9,10) à leur surface périphérique permettant le passage du fluide de refroidissement.

10. Échangeur (1) selon la revendication 9, dans lequel des découpes de petite dimension (9) sont ménagées dans des zones opposées à des découpes principales plus grandes (10) pour obtenir un flux de fluide de refroidissement les traversant et produire des courants et pour éviter les zones de faible vitesse de l'autre côté du déflecteur transversal (7a-7d).

11. Échangeur (1) selon l'une des revendications 1 à 10, dans lequel le déflecteur longitudinal (6) comporte des découpes (11) de petite dimension pour obtenir un débit minimal de fluide de refroidissement à travers lui et éviter les zones de faible vitesse.

12. Échangeur (1) selon l'une des revendications 1 à 11, dans lequel les moyens déflecteurs (6,7a-7d) sont métalliques.

13. Échangeur (1) selon la revendication 12, dans lequel les moyens déflecteurs (5, 7a-7d) métalliques sont joints à la carcasse (2) au moyen d'une pâte à souder ou d'un procédé de soudure à l'arc ou au laser, le déflecteur longitudinal (6) étant joint à la plaque de support (3b) pour empêcher tout déplacement longitudinal.

14. Échangeur (1) selon l'une des revendications 1 à 11, dans lequel les moyens déflecteurs (6,7a-7d) sont en matière plastique.

15. Échangeur (1) selon la revendication 14, dans lequel la carcasse (2) comporte des nervures, longitudinales ou transversales, qui guident les déflecteurs (6,7a-7d) en plastique au cours de leur procédé d'assemblage et qui empêchent leur déplacement dans les conditions de fonctionnement.

16. Échangeur (1) selon l'une des revendications 1 à 11, dans lequel les déflecteurs transversaux (7a-7d) sont en matière plastique et les déflecteurs longitudinaux (6) sont métalliques.

17. Échangeur (1) selon la revendication 16, dans lequel les déflecteurs transversaux (7a-7d) en plastique sont fixés au déflecteur longitudinal (6) métallique au moyen d'ailes de petite dimension réalisées dans celui-ci.

18. échangeur (1) selon l'une des revendications 1 à 17, dans lequel les moyens déflecteurs (6,7a-7d) sont insérés dans une carcasse métallique ou en plastique.

19. Échangeur (1) selon l'une des revendications 1 à 18, dans lequel les conduits d'entrée (4) et de sortie (5) du fluide de refroidissement sont séparés d'une distance suffisamment grande pour permettre la mise en place d'un déflecteur longitudinal (6) plan.

20. Échangeur (1) selon l'une des revendications 1 à 18, dans lequel si les conduits d'entrée (4) et de sortie (5) du fluide de refroidissement sont très rapprochés, le déflecteur longitudinal (6) comporte une partie en gradin pour contourner l'un desdits conduits (4,5).

## Patentansprüche

1. Wärmetauscher (1) für Gas, insbesondere für die Abgase eines Motors, der einen innerhalb eines Gehäuses (2) angeordneten Kern enthält, wobei der Kern ein für den Durchfluss der Gase mit Wärmeaustausch mit einem Kühlmittel bestimmtes Rohrbündel aufweist, wobei die Rohre über ihre Enden zwischen zwei Trägerplatten (3a, 3b) befestigt sind, die mit jedem Ende des Gehäuses (2) gekoppelt sind, wobei der Kern außerdem zwei Eingangs- (4) und Ausgangskanäle (5) des Kühlmittels aufweist, die nahe beieinander und auf der gleichen Seite des Gehäuses angeordnet sind, wobei der Wärmetauscher im Inneren des Gehäuses (2) angeordnete Umleiteinrichtungen (6, 7a-7d) enthält, die den Kühlmittelstrom bezüglich der Zirkulation des Gasstroms in mindestens einem Teil des Gehäuses (2) im Gegenstrom steuern können, wobei die Umleiteinrichtungen Ablenkeinrichtungen (6, 7a-7d) sind, und dass die Ablenkeinrichtungen einen Längsablenker (6) aufweisen, der in einem geeigneten Abstand von der Innenwand des Gehäuses (2) angeordnet ist, um den Durchlass des Kühlmittelstroms zum Gaseingangsende (8a) zu erlauben, **dadurch gekennzeichnet, dass** die Ablenkeinrichtungen eine Vielzahl von Querablenkern (7a-7d) aufweisen, die abwechselnd entlang des Längsablenkers (6) angeordnet und mit Durchlassausschnitten (9, 10) versehen sind, die es erlauben, den Kühlmittelstrom vom Gaseingangsende (8a) zum Gasausgangsende (8b) gemäß einer im Wesentlichen schraubenförmigen Bahn homogen zu leiten, wobei der Abstand zwischen dem Längsablenker (6) und der Innenwand des Gehäuses (2), in der sich einer der Kanäle (4) des Kühlmittels befindet, etwa einen oder zwei Stränge von Gasrohren beträgt, was es einem Kühlmittel ermöglicht, schnell zum Gaseingang gebracht zu werden.

2. Tauscher (1) nach Anspruch 1, wobei der Längsablenker (6) mit der Trägerplatte (3b) entgegengesetzt zum Gaseingang (8a) direkt oder durch Freilassen eines kleinen Zwischenraums abhängig von den Dichtungen und den Materialien verbunden ist.

3. Tauscher (1) nach einem der Ansprüche 1 bis 2, wobei die Länge des Längsablenkers (6) vom Durchmesser des Gehäuses (2) und von der verwendeten Technologie der Gasrohre abhängt.

4. Tauscher (1) nach einem der Ansprüche 1 bis 3, wobei bestimmte Querablenker (7a, 7c, 7d) direkt mit dem Längsablenker (6) verbunden und andere Querablenker (7b) mit der Innenwand des Gehäuses (2) verbunden sind.

5. Tauscher (1) nach einem der Ansprüche 1 bis 4, wobei die Anzahl und die Stellung der Querablenker (7a-7d) vom Durchmesser und von der Länge des Gehäuses (2) abhängen.

6. Tauscher (1) nach einem der Ansprüche 1 bis 5, wobei ein erster Querablenker (7a), der der Trägerplatte (3a) des Gaseingangs (8a) am nächsten liegt, an einem Ende des Längsablenkers angeordnet ist.

7. Tauscher (1) nach Anspruch 6, wobei die Länge des ersten Querablenkers (7a) ausreichend groß ist, um einen Durchlassbereich des Kühlmittels gleich dem den Längsablenker (6) von der Innenwand des Gehäuses (2) trennenden Abstand zu garantieren.

8. Tauscher (1) nach Anspruch 6 oder 7, wobei der Rest der Querablenker (7b-7d), die nach dem ersten Querablenker (7a) angeordnet sind, so verteilt ist, dass zwischen ihnen ein zunehmender Abstand freigelassen wird, je weiter sie sich vom Gaseingang (8a) und somit vom wärmsten Bereich entfernen.

9. Tauscher (1) nach einem der Ansprüche 1 bis 8, wobei die Querablenker (7a-7d) eine geringere Abmessung als die Trägerplatten (3a, 3b) haben und Ausschnitte (9, 10) an ihrer Umfangsfläche aufweisen, die den Durchlass des Kühlmittels erlauben.

10. Tauscher (1) nach Anspruch 9, wobei Ausschnitte kleiner Abmessung (9) in Bereichen gegenüber Hauptausschnitten größerer Abmessungen (10) freigelassen sind, um einen sie durchquerenden Kühlmittelstrom zu erhalten und Ströme zu erzeugen und um die Bereiche geringer Geschwindigkeit auf der anderen Seite des Querablenkers (7a-7d) zu vermeiden.

11. Tauscher (1) nach einem der Ansprüche 1 bis 10, wobei der Längsablenker (6) Ausschnitte (11) kleiner Abmessung aufweist, um einen minimalen Durchfluss von Kühlmittel durch ihn hindurch zu erhalten und die Bereiche geringer Geschwindigkeit zu vermeiden.

12. Tauscher (1) nach einem der Ansprüche 1 bis 11, wobei die Ablenkeinrichtungen (6, 7a-7d) aus Metall sind.

13. Tauscher (1) nach Anspruch 12, wobei die metallischen Ablenkeinrichtungen (6, 7a-7d) mit dem Gehäuse (2) mittels einer Schweißpaste oder eines Lichtbogen- oder Laserschweißverfahrens verbunden sind, wobei der Längsablenker (6) mit der Trägerplatte (3b) verbunden wird, um jede Längsverschiebung zu verhindern.

14. Tauscher (1) nach einem der Ansprüche 1 bis 11, wobei die Ablenkeinrichtungen (6, 7a-7d) aus Kunststoff sind.

15. Tauscher (1) nach Anspruch 14, wobei das Gehäuse (2) Längs- oder Querrippen aufweist, die die Ablenker (6, 7a-7d) aus Kunststoff während ihres Zusammenbauverfahrens steuern und ihre Verschiebung unter Betriebsbedingungen verhindern.

16. Tauscher (1) nach einem der Ansprüche 1 bis 11, wobei die Querablenker (7a-7d) aus Kunststoff und die Längsablenker (6) aus Metall sind.

17. Tauscher (1) nach Anspruch 16, wobei die Querablenker (7a-7d) aus Kunststoff am metallischen Längsablenker (6) mittels Flügeln kleiner Abmessung befestigt sind, die in diesem hergestellt sind.

18. Tauscher (1) nach einem der Ansprüche 1 bis 17, wobei die Ablenkeinrichtungen (6, 7a-7d) in ein Gehäuse aus Metall oder Kunststoff eingefügt werden.

19. Tauscher (1) nach einem der Ansprüche 1 bis 18, wobei die Eingangs- (4) und Ausgangskanäle (5) des Kühlmittels um einen ausreichend großen Abstand getrennt sind, um das Einsetzen eines ebenen Längsablenkers (6) zu erlauben.

20. Tauscher (1) nach einem der Ansprüche 1 bis 18, wobei, wenn die Eingangs- (4) und Ausgangskanäle (5) des Kühlmittels sehr nahe beieinander liegen, der Längsablenker (6) einen abgestuften Teil aufweist, um einen der Kanäle (4, 5) zu umgehen.

## Claims

1. Heat exchanger (1) for gases, in particular for the exhaust gases of an engine, comprising a core arranged inside a frame (2), said core comprising an array of tubes designed for the circulation of the gases with heat exchange with a coolant, said tubes being fixed by their ends between two support plates (3a, 3b) coupled to each end of the frame (2), said core further comprising two inlet (4) and outlet (5) ducts for the coolant arranged in the vicinity of one another and on the same side of the frame, the heat exchanger comprising bypass means (6, 7a-7d) arranged inside the frame (2), capable of directing the flow of coolant in the opposing direction relative to the circulation of the flow of gas in at least one part of said frame (2), the bypass means being deflecting means (6, 7a-7d) and in that the deflecting means comprising a longitudinal baffle (6) arranged at a suitable distance from the internal wall of the frame (2) to permit the passage of the flow of coolant to the gas inlet end (8a), **characterized in that** the deflecting means comprise a plurality of transverse baffles (7a-7d) arranged alternately along the longitudinal baffle (6) and provided with passage cut-outs (9, 10) making it possible to direct uniformly the flow of coolant from the gas inlet end (8a) to the gas outlet end (8b) along a substantially helicoidal trajectory, in which the distance between the longitudinal baffle (6) and the internal wall of the frame (2) in which one of the ducts (4) for the coolant is located, is approximately one or two rows of gas tubes, making if possible for a coolant to be rapidly conveyed to the gas inlet.

2. The exchanger (1) according to Claim 1, in which the longitudinal baffle (6) is joined to the support plate (3b) opposing the gas inlet (8a) directly or by creating a small space depending on the joints and materials.

3. Exchanger (1) according to either of Claims 1 and 2, in which the length of the longitudinal baffle (6) depends on the diameter of the frame (2) and on the technology of the gas tubes used.

4. Exchanger (1) according to one of Claims 1 to 3, in which some transverse baffles (7a, 7c, 7d) are joined directly to the longitudinal baffle (6) and other transverse baffles (7b) are joined to the internal wall of the frame (2).

5. Exchanger (1) according to one of Claims 1 to 4, in which the number and the position of the transverse baffles (7a-7d) depend on the diameter and the length of the frame (2).

6. Exchanger (1) according to one of Claims 1 to 5, in which a first transverse baffle (7a) which is closer to the support plate (3a) of the gas inlet (8a) is arranged at one end of the longitudinal baffle.

7. Exchanger (1) according to Claim 6, in which the length of said first transverse baffle (7a) is sufficiently great to guarantee a passage area for the coolant which is similar to the distance separating the longitudinal baffle (6) from the internal wall of the frame (2).

8. Exchanger (1) according to Claim 6 or 7, in which the remainder of the transverse baffles (7b-7d), which are arranged following said first transverse baffle (7a), are distributed so as to create therebetween a distance which increases the further they are removed from the gas inlet (8a) and thus the hottest zone.

9. Exchanger (1) according to one of Claims 1 to 8, in which the size of the transverse baffles (7a-7d) is smaller than that of the support plates (3a, 3b) and said baffles comprise cut-outs (9, 10) on their peripheral surface permitting the passage of coolant.

10. Exchanger (1) according to Claim 9, in which small cut-outs (9) are formed in areas opposing the larger principal cut-outs (10) to obtain a flow of coolant passing through said cut-outs and to produce currents and to avoid the low-speed zones on the other side of the transverse baffle (7a-7d).

11. Exchanger (1) according to one of Claims 1 to 10, in which the longitudinal baffle (6) comprises small cut-outs (11) to obtain a minimal flow rate of coolant through said baffle and to avoid low-speed zones.

12. Exchanger (1) according to one of Claims 1 to 11, in which the deflecting means (6, 7a-7d) are metal.

13. Exchanger (1) according to Claim 12, in which the metal deflecting means (6, 7a-7d) are joined to the frame (2) by means of a solder paste or an arc welding or laser welding method, the longitudinal baffle (6) being joined to the support plate (3b) to prevent any longitudinal displacement.

14. Exchanger (1) according to one of Claims 1 to 11, in which the deflecting means (6, 7a-7d) are made of plastics material.

15. Exchanger (1) according to Claim 14, in which the frame (2) comprises longitudinal or transverse ribs which guide the plastics baffles (6, 7a-7d) during the assembly process thereof and which prevent the displacement thereof during operation.

16. Exchanger (1) according to one of Claims 1 to 11, in which the transverse baffles (7a-7d) are made of plastics material and the longitudinal baffles (6) are metal.

17. Exchanger (1) according to Claim 16, in which the plastics transverse baffles (7a-7d) are fixed to the longitudinal metal baffle (6) by means of small fins formed therein.

18. Exchanger (1) according to one of Claims 1 to 17, in which the deflecting means (6, 7a-7d) are inserted into a metal or plastics frame.

19. Exchanger (1) according to one of Claims 1 to 18, in which the inlet (4) and outlet (5) ducts for the coolant are separated by a sufficiently large distance to permit the positioning of a planar longitudinal baffle (6).

20. Exchanger (1) according to one of Claims 1 to 18, in which if the inlet (4) and outlet (5) ducts for the coolant are very close together, the longitudinal baffle (6) comprises a stepped portion to bypass one of said ducts (4, 5).
